# EUROPÄISCHE PATENTSCHRIFT

(11) **EP 1 856 966 B1**
(45) Veröffentlichungstag und Bekanntmachung des Hinweises auf die Patenterteilung: **18.11.2009**
(21) Anmeldenummer: 07103370.8
(22) Anmeldetag: 02.03.2007
(51) Int. Cl.: A01D 41/12, A01F 12/40

(54) **Verfahren und Vorrichtung zum Betreiben einer Erntegutzerkleinerungs- und -verteilvorrichtung**
Method and device for operating a crop milling and distribution device
Procédé et dispositif destiné au fonctionnement d'un dispositif de broyage et de répartition d'épinards

(30) Priorität: 17.05.2006 DE 102006023381
(43) Veröffentlichungstag der Anmeldung: 21.11.2007
(73) Patentinhaber: CLAAS Selbstfahrende Erntemaschinen GmbH, 33428 Harsewinkel (DE)
(72) Erfinder: Niermann, Martin, 33428, Harsewinkel (DE); Jeppe, Eckehard, 34289, Zierenberg (DE); Nollmann, Jürgen, 33775, Versmold (DE); Brinkmann, Jörn, 33428, Harsewinkel (DE); Amsbeck, Dieter, 33428, Harsewinkel (DE); Hornberg, Oliver, 33602, Bielefeld (DE)

(56) Entgegenhaltungen:
- EP-A1- 1 350 424
- DE-A1- 2 815 936
- DE-A1- 4 313 841
- DE-B3- 10 359 396

## Beschreibung

Die Erfindung betrifft ein Verfahren zum Betreiben eines Mähdreschers und einen Mähdrescher gemäß dem Oberbegriff der Ansprüche 1 und 4.

Eine Emtegutzerkleinerungs- und Verteileinrichtung ist aus der DE 38 38 936 bekannt, die aus einem Strohhäcksler besteht, der von einem Hordenschüttler mit Stroh beaufschlagt wird. Dem Strohhäcksler ist eine Verteileinrichtung für das gehäckselte Stroh nachgeschaltet. Die symmetrisch aufgebaute Verteileinrichtung besitzt Leitbleche, die an ihren dem Häcksler zugewandten Enden um Achsen schwenkbar gelagert sind. Über zwei Stellleisten sind zwei Gruppen von Leitblechen miteinander gekoppelt. Jede Stellleiste ist an einem Stellhebel angelenkt, wobei der Stellhebel mit einer Koppelstange längsverschieblich und durch Anschläge begrenzt verbunden ist, um die Verteilbreite abhängig von der Windrichtung und der Hangneigung zu ändern.

Nachteilig bei dieser Emtegutzerkleinerungs- und Verteileinrichtung ist, dass die von dem Hordenschüttler dem Strohhäcksler zugeführte Strohmenge gleichmäßig über die Breite des Strohhäckslers verteilt ist und damit auch die vom Strohhäcksler den beiden Hälften der symmetrisch aufgebauten Verteileinrichtung zugeführten Häckselgutmengen gleichgroß sind. Bei asymetrischer Einstellung der Leitbleche werden die gleichgroßen Häckselgutmengen auf unterschiedlich großen Teilverteilbreiten auf dem Feld verteilt. Dadurch ergibt sich auf der kleineren Teilverteilbreite eine höhere Schichtdicke des Häckselgutes als auf der größeren Teilverteilbreite. Die Verteileinrichtung ist nicht imstande, die vom Strohhäcksler zugeführte Häckselgutmenge entsprechend den Teilverteilbreften aufzuteilen, da die Leitbleche der Verteileinrichtung den Erntegutstrom nicht über die Symmetrieachse der Verteileinrichtung umlenken können.

Die EP 1 350 424 B1 offenbart einen Mähdrescher mit einer Strohleitvorrichtung, die zwischen zwei Axialtrenneinrichtungen und dem Strohhäcksler angeordnet ist. Der Austritt des Strohs aus den Axialtrenneinrichtungen erfolgt ungleichmäßig, da sich in Abhängigkeit von der Gutfeuchte des Emtegutes die Anzahl der Umläufe des Emtegutes um den Rotor der Axialtrenneinrichtung und damit der Abgabepunkt des Erntegutes beim Verlassen der Axialtrenneinrichtungen ändert. Um eine gleichmäßige Beaufschlagung des Häckslers zu erzielen, wird die Strohleiteinrichtung über einen Motor verstellt, wobei die Querverteilung des Strohs im Bereich des Strohhäcksler mit Sensoren ermittelt wird, die über eine Steuerung mit dem Motor verbunden sind. Weiterhin ist eine Strohleiteinrichtung offenbart, die als unterhalb der Strohverteilerhaube angeordnete, über die Breite des Strohhäcksters verteilte Strohleitbleche ausgeführt ist. Die Strohleitbleche sind über wenigstens einen Motor um Achsen verschwenkbar, wobei der Motor in Abhängigkeit von der von Sensoren ermittelten Querverteilung des Strohs im Strohhäcksler gesteuert wird, so dass sich eine gleichmäßige Verteilung der Häckselgutmenge über die Schnittbreite des Mähdreschers ergibt. Beispielsweise werden die Strohleitbleche so verstellt, dass zum Ausgleich mehr Häckselgut von der Mitte nach außen oder umgekehrt geleitet wird.

Nachteilig bei diesen Strohleiteinrichtungen ist wiederum, dass das Stroh dem Strohhäcksler immer gleichmäßig über die Häckslerbreite zugeführt wird und damit auch die aus dem Strohhäcksler austretende und der Verteilhaube zugeführte Häckselgutmenge über die Breite der Verteilhaube konstant ist. Bei Verschiebung der Verteilbreite aus der Längsachse des Mähdreschers durch Einstellung der Strohleitbleche der Verteilhaube resultiert daraus jedoch, dass gleichgroße Häckselgutmengen auf unterschiedlich großen Teilverteilbreiten auf dem Feld verteilt werden, wodurch sich auf der kleineren Teilverteilbreite eine höhere Schichtdicke des Häckselgutes als auf der größeren Teilverteilbreite ergibt.

Der vorliegenden Erfindung liegt daher die Aufgabe zugrunde, die Nachteile des Standes der Technik zu vermeiden und insbesondere ein Verfahren und eine Vorrichtung anzugeben, bei der das Häckselgut unabhängig von der Verteilbreite des Häckselgutes in gleichmäßiger Schichtdicke auf dem Feld abgelegt wird.

Diese Aufgabe wird erfindungsgemäß durch die kennzeichnenden Merkmale der Ansprüche 1 und 4 gelöst. Weitere vorteilhafte Wirkungen des Erfindungsgegenstandes ergeben sich aus den Unteransprüchen.

Indem kennzeichnenden Anspruch 1 kann das Häckselgut unabhängig von der Verteilbreite in gleichmäßiger Schichtdicke auf dem Feld abgelegt werden.

Eine einfache Aufteilung der aus der Trennvorrichtung austretenden Erntegutmenge ergibt sich, wenn in vorteilhafter Ausgestaltung der Erfindung die Zuführung des Erntegutes zum Strohhäcksler durch die Umlenkung des Erntegutes durch das Verteilorgan bestimmt wird.

Dadurch, dass das Verteilorgan das Erntegut in Abhängigkeit von der Position der Verteilbreite umlenkt, kann die Verteilung der Häckselgutmenge an die Position der Verteilbreite angepasst werden,

Eine konstruktiv einfache Umsetzung des erfindungsgemäßen Verfahrens ergibt sich, wenn zwischen der Trenneinrichtung und dem Strohhäcksler ein Verteilorgan zwischengeschaltet ist und das Verteilorgan mit einer Steuereinheit verbunden ist, mit der das Verteilorgan in Abhängigkeit von der Position der Verteilbreite geregelt wird.

In einer vorteilhaften Ausgestaltung der Erfindung verläuft die Verteilbreite quer zur Längsachse des Mähdreschers und die Lage der Verteilbreite ist durch Einstellen der Verteileinrichtung quer zur Längsachse des Mähdreschers verschiebbar, so dass der Abstand zur Bestandskante angepasst werden kann, um zu verhindern das bei Erntefahrten am Hang oder bei Seitenwind Häckselgut in den Bestand geworfen wird.

In vorteilhafter Weiterbildung der Erfindung erfolgt die Verstellung der Verteileinrichtung über ein Stellglied, so dass der ohnehin mit vielen Aufgaben betraute Fahrer nicht zusätzlich belastet wird,

Die Position der Verteilbreite wird mit einem Sensor ermittelt, wobei der Sensor mit der Steuereinheit verbunden ist, so dass die Steuereinheit ständig Informationen über die aktuelle Position der Verteilbreite erhält.

Der Sensor ist vorteilhafterweise ein Wegesensor, mit dem die Verstellung des Stellgliedes detektiert wird, wobei der Wegesensor proportional abhängig von der Position der Verteilbreite zur Längsachse des Mähdreschers ein Positionssignal erzeugt, so dass sich eine einfache und robuste Anordnung zur Ermittlung der Lage der Arbeitsbreite ergibt.

Dadurch, dass das Verteilorgan wenigstens ein verschwenkbares Leitorgan aufweist, wobei das Leitorgan über wenigstens ein Stellglied verstellbar ist, erfolgt auch die Betätigung der Leitorgane selbsttätig und ohne Zutun des Fahrers

Indem das Stellglied des Leitorgans mit der Steuereinheit verbunden ist und die Steuereinheit in Abhängigkeit von dem von dem Wegesensor generierten Positionssignal ein Stellsignal generiert und mit dem generierten Stellsignal das Stellglied des Leitorgans regelt, ist eine vollautomatische Regelung der Leitorgane ausführbar und eine sofortige Anpassung des Erntegutstroms innerhalb der Maschine an die unmittelbar vorher gemessenen Lage der Verteilbreite möglich.

Dadurch, dass die Leitorgane des Verteilorgans das aus der Trenneinrichtung austretende Erntegut proportional zur Lage der Verteilbreite zur Längsachse des Mähdreschers dem Strohhäcksler zuführt, wird die anteilige Häckselgutmenge an die anteilige Teilvertelbreite angepasst, so dass sich eine nahezu konstante Schichtdicke über die gesamte Verteilbreite ergibt.

Dadurch, dass die Abgabe der Erntegutmenge im Austrittsbereich des Strohhäckslers und im Austrittsbereich der Verteileinrichtung der Zuführung des Erntegutes im Eintrittsbereich des Strohhäckslers entspricht, ist eine geregelte Aufteilung des Erntegutes schon vor dem Eintritt in den Strohhäcksler möglich,

Weitere vorteilhafte Ausgestaltungen sind Gegenstand weiterer Unteransprüche und werden nachfolgend an Hand des in mehreren Figuren dargestellten Ausführungsbeispiels näher erläutert

Es zeigen:
- Fig.1: eine schematische Seitenansicht eines Mähdreschers bei der Erntefahrt,
- Fig.2: eine schematische Draufsicht des Mähdreschers gemäß Fig.1 bei einer ersten Lage der Verteilbreite,
- Fig.3: eine schematische Draufsicht des Mähdreschers gemäß Fig.1 bei einer zweiten Lage der Verteilbreite.

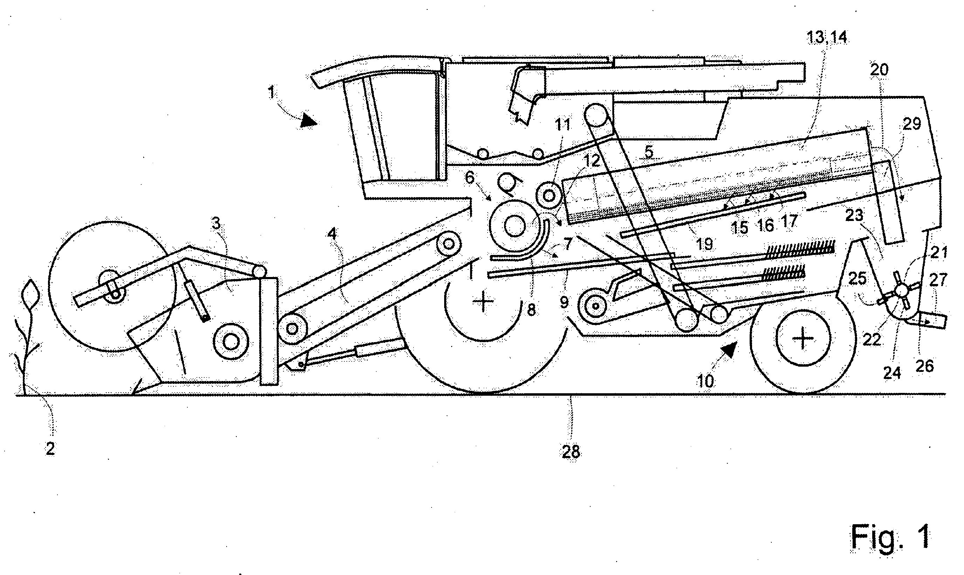

Fig. 1 zeigt ein Seitenansicht einer als Mähdrescher 1 ausgeführten landwirtschaftlichen Arbeitsmaschine bei der Erntefahrt. Das Erntegut 2 wird zunächst von einem Schneidwerk 3 aufgenommen, das das Erntegut 2 einem Schrägförderer 4 zuführt, der frontseitig am Mähdrescher 1 angeordnet ist. Der Schrägförderer 4 übergibt das Erntegut 2 an ein im Maschinengehäuse 5 des Mähdreschers 1 angeordnetes Dreschwerk 6. Das Dreschwerk 6 bearbeitet das Erntegut 2 intensiv, so dass die Körner aus den Früchten des Ernteguts 2 herausgelöst werden. Ein aus zum überwiegenden Teil aus Körnern bestehendes Korn-Spreu-Gemisch 7 wird an dem Dresch- und Abscheidekorb 8 des Dreschwerks 6 abgeschieden und gelangt über einen Vorbereitungsboden 9 zu einer an sich bekannten und daher hier nicht näher erläuterten Reinigungseinrichtung 10, in der die Körner von den Nichtkombestandteilen, das heißt von Halm- und Spreuteilen getrennt werden, Im rückwärtigen Bereich ist dem Dreschwerk 6 eine entgegen dem Uhrzeigersinn rotierende Wendetrommel 11 zugeordnet, die den aus dem Dreschwerk 6 austretenden, im wesentlichen aus ausgedroschenen Halmen bestehenden Gutstrom 12 annimmt und einer Trennvorrichtung 13 wie beispielsweise zwei nebeneinander angeordneten Trennrotoren 14 zuführen, die den Gutstrom 12 in den rückwärtigen Bereich des Mähdreschers 1 fördern. Dabei werden die noch im Gutstrom 12 befindlichen Körner 15 sowie eventuell Kurzstroh 16 und Spreu 17 abgetrennt, indem sie durch die mit Sieböffnungen versehenen Trennrotoren 14 hindurch auf einen Rücklaufboden 19 fallen. Die Trennvorrichtung 13 ist nicht auf diese Ausführung beschränkt, so kann die Trenneinrichtung 13 auch als Hordenschüttler ausgeführt sein, beziehungsweise kann die Trenneinrichtung 13 auch als Rotor oder Rotoren mit Dresch- und Abscheidebereich ausgeführt sein. Der Rücklaufboden 19 transportiert Körner 15, Kurzstroh 16 und Spreu 17 ebenfalls zum Vorbereitungsboden 9 und über diesen ebenfalls in die Reinigungseinrichtung 10, in welcher die Körner 15 vom Kurzstroh 16 und von der Spreu 17 getrennt werden. Das am Ende der Trennrotoren 14 aus den Trennrotoren 14 austretende, zum größten Anteil aus Stroh bestehende Erntegut 20 wird einem Strohhäcksler 21 zugeführt. Der Strohhäcksler 21 weist eine rotierende Häckslerwelle 22 auf, die in dem Häckslergehäuse 23 gelagert ist. Die Häckslerwelle 22 ist mit beweglichen Messern 24 besetzt, die mit im Häckslergehäuse 23 fest angeordneten Gegenmessern 25 kämmen. Mit diesen Messern 24, 25 wird das Stroh 20 zu Häckselgut 26 zerkleinert und beschleunigt und mit hoher Geschwindigkeit einer Verteileinrichtung 27 zugeführt, mit der das Häckselgut 26 auf dem abgeerntetem Feld 28 verteilt wird. Zwischen der Trenneinrichtung 13 und dem Strohhäcksler 21 ist das an späterer Stelle näher erläutertes Verteilorgan 29 angeordnet, mit dem erfindungsgemäß die Zuführung des Häckselgutes 20 zum Strohhäcksler 21 regelbar ist

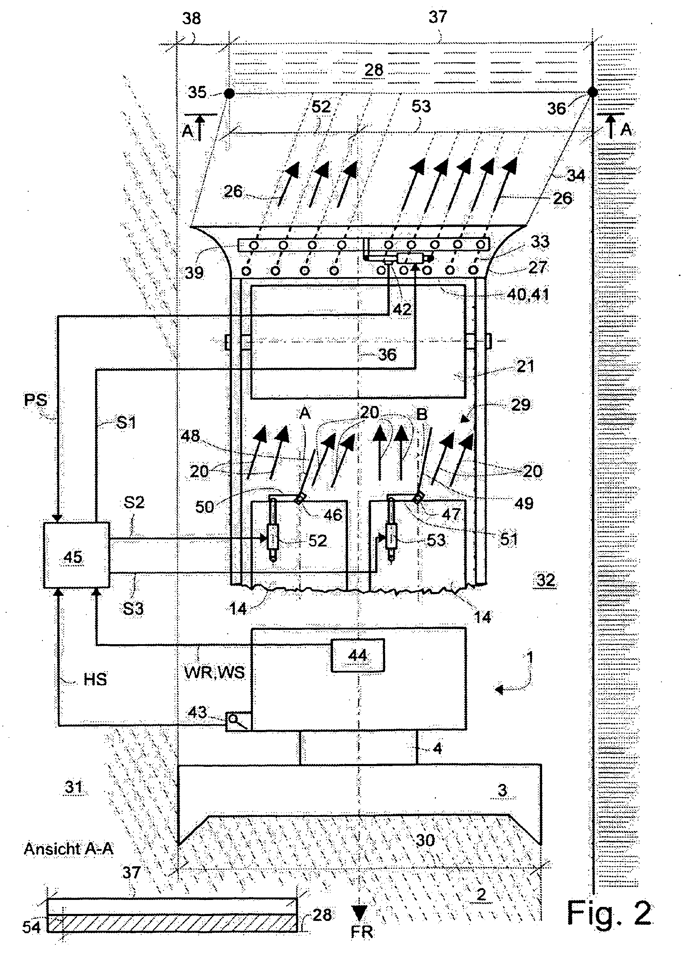

In Fig.2 ist eine schematische Draufsicht des Mähdreschers 1 bei der Erntefahrt dargestellt. Das frontseitig am Mähdrescher 1 angeordnete Schneidwerk 3 weist eine Schnittbreite 30 auf, mit der das Erntegut 2 vom Feld geerntet wird. In Erntefahrtrichtung FR betrachtet rechts vom Mähdrescher 1 und vor dem Schneidwerk 3 steht der noch zu erntende Bestand 31 während sich links vom Mähdrescher 1 und hinter dem Mähdrescher 1 das bereits abgeerntete Feld 32 befindet. In der Verteileinrichtung 27 sind mehrere Leitbleche 33 angeordnet die das vom Strohhäcksler 21 zugeführte Häckselgut 26 im Austrittbereich der Verteileinrichtung 27 umlenken und verteilen. Hinter der Verteileinrichtung 27 sind mehrere in unterschiedliche Richtungen weisende Flugbahnen 34 des Häckselgutes 26 strichpunktiert dargestellt, wobei die Enden 35, 36 der beiden äußeren Flugbahnen 34 eine Verteilbreite 37 begrenzen, in der das Häckselgut 26 auf dem Feld 28 verteilt wird. Die Verteilbreite 37 entspricht der Schnittbreite 30 des Schneidwerks 3, damit auf jede Stelle des abgeernteten Feldes 32 Häckselgut 26 verteilt wird. Die Verteilbreite 37 verläuft quer zur Längsachse 36 des Mähdreschers 1 und ist um einen Abstand 38 vom Bestand 31 entfernt, damit bei Seitenwind oder beim Fahren am Hang kein Häckselgut 26 in den Bestand 31 geworfen wird, welches die Arbeitsorgane 6, 10, 13, 14 des Mähdreschers 1 zusätzlich belasten würde, Durch die Verstellung der Leitbleche 33 der Verteileinrichtung 27 kann die Verteilbreite 37 quer zur Längsachse 36 des Mähdreschers 1 verschoben und damit der Abstand 38 der Verteilbreite 37 zum Bestand 31 verändert werden, um ihn entsprechend an die Hangneigung oder an die Windverhältnisse anzupassen. Die Leitbleche 33 sind über ein Gestänge 39 miteinander gekoppelt, und werden gemeinsam über ein als Linearmotor 40 ausgeführtes Stellglied 41 gemeinsam verschwenkbar angetrieben.

Der dargestellte Mähdrescher 1 weist an verschiedenen Stellen unterschiedliche Sensoren auf. Die Position der Verteilbreite 37 wird durch einen Wegesensor 42 erfasst, der am Linearmotor 40 angeordnet ist. Der Wegesensor 42 erzeugt ein Positionssignal PS, dass sich proportional zur Lage der Verteilbreite 37 zur Längsachse 36 des Mähdreschers 1 ändert. Weiterhin weist der Mähdrescher 1 einen Hangneigungssensor 43 auf, der ein von der Hangneigung quer zur Fahrtrichtung FR abhängiges Hangneigungssignal HS erzeugt- Zusätzlich ist der Mähdrescher 1 mit einer Windmesseinrichtung 44 ausgerüstet, die abhängig von der Windrichtung und Windstärke ein Windrichtungssignal WR und ein Windstärkesignal WS generiert
Die Sensoren 42, 43, 44 und der Linearmotor 40 zur Einstellung der Leitbleche 33 sind mit einer Steuereinheit 45 verbunden, die abhänge von den vom Hangneigungssensor 43 und/oder von dem Windmesseinrichtung 44 erzeugten Signalen HS, WR, WS Stellsignale S1 generiert und zur Regelung der Verteilbreite 37 an den Linearmotor 40 übermittelt.

Um eine Verteilung des Häckselgutes 26 in gleichmäßiger Schichtdicke 54 (siehe Ansicht A-A) über die gesamte Verteilbreite 37 zu erreichen, ist zwischen den Trennrotoren 14 und dem Strohhäcksler 21 das Verteilorgen 29 zwischengeschaltet, welches erfindungsgemäß die Zuführung des Erntegutes 20 zum Strohhäcksler 21 in Abhängigkeit von der Position der Verteilbreite 37 regelt. Das Verteilorgan 29 weist zwei um jeweils eine vertikale Achse 46, 47 verschwenkbare Leitorgane 48, 49 auf, wobei die Achsen 46, 47 durch die Drehachse des zugehörigen Trennrotors 14 verlaufen, Beide Leitorgane 48, 49 sind jeweils über eine Koppelstange 50, 51 mit jeweils einem als Linearmotor 52, 53 ausgeführtem Stellglied verbunden, der betreibbar ist, die Leitorgane 48, 49 um die zugehörige Achse 46, 47 zu verschwenken. Das Leitorgane 48 ist um einen Winkel A und das Leitorgan 49 um einen Winkel B nach rechts verschwenkt, beide Leitorgane lenken das aus den Trennvorrichtungen 14 austretende Erntegut 20 anteilig in die in Gutstromrichtung des Ernteguts 20 gesehen rechte Hälfte des Strohhäckslers 21 um.
Die Linearmotoren 52, 53 sind mit der Steuereinheit 45 verbunden, die die Linearmotoren 52, 53 in Abhängigkeit von der Lage der Verteilbreite 37 regelt, Hierzu generiert die Steuereinheit 45 in Abhängigkeit von dem Lagesignal PS des Wegesensor 42 Stellsignale S2, S3, die an die Linearmotoren 52, 53 übermittelt werden, Die Linearmotoren 52, 53 verschwenken die Leitorgane 48, 49 derart, das die aus der Trennvorrichtung 14 austretende Erntegutmenge 20 proportional zur Lage der Verteilbreite 37 zur Längsachse 36 des Mähdreschers 1 dem Strohhäcksler 21 verteilt zugeführt wird, so dass das Verhältnis des auf die rechte Seite der Längsachse 36 verteilen Ernteguts 20 zu dem auf die linke Seite der Längsachse 36 verteilen Ernteguts 20 gleich dem Verhältnis der durch die Teilung der Verteltbreite 37 durch die Längsachse 36 entstehenden Teilverteilbreiten 52, 53 entspricht. Dadurch wird eine Verteilung des Häckselgutes 26 in gleichmäßiger Schichtdicke 54 über die gesamte Verteilbreite 37 erreicht, da die Abgabe der Erntegutmenge 26 im Austrittsbereich des Strohhäckslers 21 und im Austrittsbereich der Verteileinrichtung 27 der Verteilung des Ernteguts 20 im Eintrittsbereich des Strohhäckslers 21 entspricht, welche durch die Position der Leitorgane 48, 49 des Verteilorgans 29 bestimmt wird.

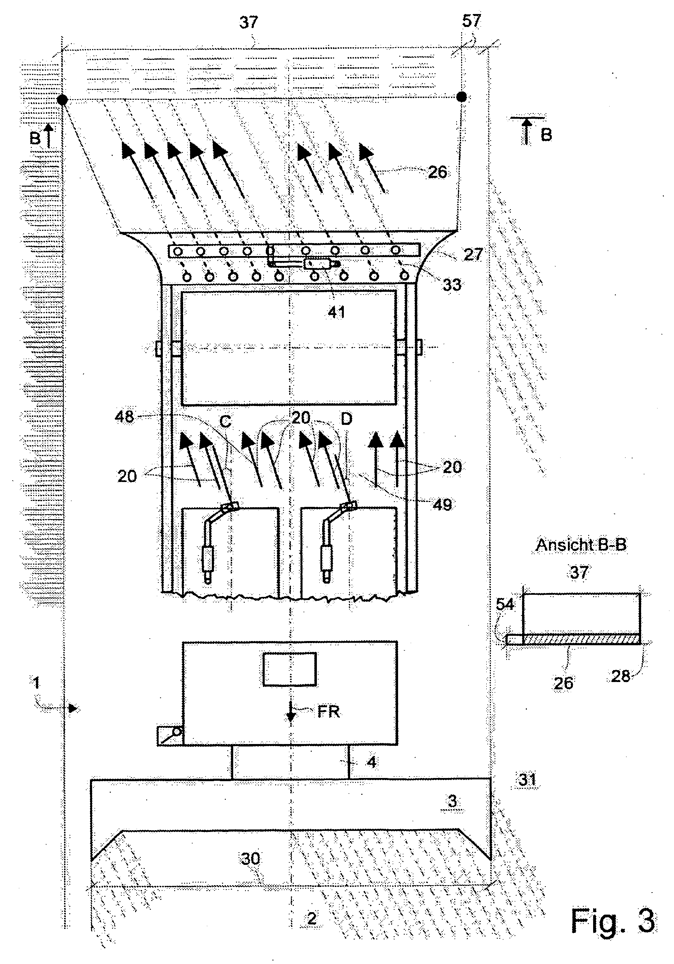

In Fig. 3 ist der Mähdrescher 1 gemäß Figur 2 bei der Erntefahrt dargestellt, wobei sich der noch zu erntende Bestand 31 im Unterschied zu dem in Fig.2 dargestellten Mähdrescher 1 in Erntefahrtrichtung FR. des Mähdreschers 1 betrachtet links vom Mähdrescher 1 befindet. Die Leitbleche 33 der Verteileinrichtung 27 verteilen das Häckselgut 26 auf einer Verteilbreite 37, die einen Abstand 57 zum Bestand 31 entfernt ist. Das Leitorgane 48 ist um einen Winkel C und das Leitorgan 49 um einen Winkel D nach links verschwenkt, so dass das aus den Trennvorrichtungen 14 austretende Erntegut 20 anteilig in die in Gutstromrichtung des Ernteguts 20 gesehen linke Hälfte des Strohhäckslers 21 umlenken. Durch diese geregelte Verteilung des Erntegutes 20 zum Strohhäcksler 21 ergibt sich für jede Position der Verteilbreite 37 eine gleichmäßige Verteilung des Häckselgutes 26 über die gesamte Verteilbreite in konstanter Schichthöhe 54 auf dem Feld 28 (Ansicht B-B) .

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen,

### Bezugszeichenliste :

- 1: Mähdrescher 32 abgeerntetes Feld
- 2: Erntegut 33 Leitblech
- 3: Schneidwerk 34 Flugbahn
- 4: Schrägförderer 35 Ende
- 5: Maschinengehäuse 36 Ende
- 6: Dreschwerk 37 Verteilbreite
- 7: Korn-Spreu-Gemisch 38 Abstand
- 8: Abscheidekorb 39 Gestänge
- 9: Vorbereitungsboden 40 Linearmotor
- 10: Reinigungseinrichtung 41 Stellglied
- 11: Wendetrommel 42 Wegesensor
- 12: Gutstrom 43 Hangneigungssensor
- 13: Trennvorrichtung 44 Windmesseinrichtung
- 14: Trennrotor 45 Steuereinheit
- 15: Kurzstroh 46 Vertikale Achse
- 16: Körner 47 Vertikale Achse
- 17: Spreu 48 Leitorgan
- 19: Rücklautboden 49 Leitorgan
- 20: Erntegut 50 Koppelstange
- 21: Strohhäcksler 51 Koppelstange
- 22: Häckslerwelle 52 Linearmotor
- 23: Häckslergehäuse 53 Linearmotor
- 24: bewegliche Messer 54 Schichtdicke
- 25: Gegenmesser 55 Teilverteilbreite
- 26: Häckselgut 56 Teilverteilbreite
- 27: Verteileinrichtung 57 Abstand
- 28: Feld HS Hangneigungssignal
- 29: Verteilorgan S1 Stellsignal
- 30: Schnittbreite S2 Stellsignal
- 31: Bestand S3 Stellsignal
- 32: abgeerntetes Feld
- 33: Leitblech
- 34: Flugbahn
- 35: Ende
- 36: Ende
- 37: Verteilbreite
- 38: Abstand
- 39: Gestänge
- 40: Lineamotor
- 41: Stellglied
- 42: Wegesensor
- 43: Hangneigungssensor
- 44: Windmesseinrichtung
- 45: Steuerinheit
- 46: Vertikale Achse
- 47: Vertikale Achse
- 48: Leitorgan
- 49: Leitorgan
- 50: Koppelstange
- 51: Koppelstange
- 52: Linearmotor
- 53: Linearmotor
- 54: Schichtdicke
- 55: Teilverteilbreite
- 56: Teilverteilbreite
- 57: Hangneigungssignal
- S1: Stellsignal
- S2: Stellsignal
- S3: Stellsignal
- WR: Windrichtungssignal
- WS: Windstärkesignal
- FR: Fahrtrichtung
- A-D: Winkel
- B: Winkel
- PS: Positionssignal

## Patentansprüche

1. Verfahren zum Betreiben eines Mähdreschers mit einer Emtegutzerkleinerungs- und Verteilvorrichtung, wobei die Erntegutzerkleinerungs- und Verteilvorrichtung einen wenigstens einer Trennvorrichtung (13, 14) nachgeschalteten Strohhäcksler (21) zur Zerkleinerung von Erntegut (20), und wenigstens eine dem Strohhäcksler (21) nachgeordnete Verteileinrichtung (27) zur Verteilung einer Emtegutmenge (26) umfasst und die Verteileinrichtung (27) zur Änderung einer Verteilbreite (37) einstellbar ist, mit der die Erntegutmenge (26) auf dem Feld (28) verteilt wird und wobei zwischen der Trennvorrichtung (13, 14) und dem Strohhäcksler (21) ein Verteilorgan (29) zwischengeschaltet ist,
**dadurch gekennzeichnet,**
**dass** das Verteilorgan (29) in Abhängigkeit von der Position der Verteilbreite (37) die Zuführung des Erntegutes (20) zum Strohhäcksler (21) regelt.

2. Verfahren nach Anspruch 1,
**dadurch gekennzeichnet,**
**dass** die Zuführung des Erntegutes (20) zum Strohhäcksler (21) durch die Umlenkung des Emtegutes (20) durch das Verteilorgan (29) bestimmt wird.

3. Verfahren nach wenigstens einem der vorhergehenden Ansprüche,
**dadurch gekennzeichnet,**
**dass** das Verteilorgan (29) das Erntegut (20) in Abhängigkeit von der Position der Verteilbreite (37) umlenkt.

4. Mähdrescher mit einer Emtegutzerkleinerungs- und Verteilvorrichtung, wobei die Erntegutzerkleinerungs- und Verteilvorrichtung einen wenigstens einer Trennvorrichtung (13, 14) nachgeschalteten Strohhäcksler (21) zur Zerkleinerung von Erntegut (20), und wenigstens eine dem Strohhäcksler (21) nachgeordnete Verteileinrichtung (27) zur Verteilung einer Erntegutmenge (26) umfasst und die Verteileinrichtung (27) zur Änderung einer Verteilbreite (37) einstellbar ist, mit der die Erntegutmenge (26) auf dem Feld (28) verteilt wird und wobei zwischen der Trennvorrichtung (13, 14) und dem Strohhäcksler (21) ein Verteilorgan (29) zwischengeschaltet ist,
**dadurch gekennzeichnet,**
**dass** das Verteilorgan (29) mit einer Steuereinheit (45) in der Weise verbunden ist, dass das Verteilorgan (29) in Abhängigkeit von der Position der Verteilbreite (37) die Zuführung des Emtegutes zum Strohhäcksler (21) regelt.

5. Mähdrescher nach Anspruch 4,
**dadurch gekennzeichnet,**
**dass** die Verteilbreite (37) quer zur Längsachse (36) des Mähdreschers (1) verläuft und die Verteilbreite (37) durch Einstellen der Verteileinrichtung (27) quer zur Längsachse (36) des Mähdreschers (1) verschiebbar ist.

6. Mähdrescher nach wenigstens einem der vorhergehenden Ansprüche,
**dadurch gekennzeichnet,**
**dass** die Verstellung der Verteileinrichtung (27) über ein Stellglied (41) erfolgt.

7. Mähdrescher nach wenigstens einem der vorhergehenden Ansprüche,
**dadurch gekennzeichnet,**
**dass** die Position der Verteilbreite (37) mit einem Sensor (42) ermittelt wird, wobei der Sensor (42) mit der Steuereinheit (45) verbunden ist.

8. Mähdrescher nach wenigstens einem der vorhergehenden Ansprüche,
**dadurch gekennzeichnet,**
**dass** der Sensor (42) ein Wegesensor (42) ist, mit dem die Verstellung des Stellgliedes (41) detektiert wird, wobei der Wegesensor (42) proportional abhängig von der Position der Verteilbreite (37) zur Längsachse (36) des Mähdreschers (1) ein Positionssignal (PS) erzeugt.

9. Mähdrescher nach wenigstens einem der vorhergehenden Ansprüchen,
**dadurch gekennzeichnet,**
**dass** das Verteilorgan (29) wenigstens ein verschwenkbares Leitorgan (48, 49) aufweist, wobei das Leitorgan (48, 49) über wenigstens ein Stellglied (52, 53) verstellbar ist.

10. Mähdrescher nach wenigstens einem der vorhergehenden Ansprüchen,
**dadurch gekennzeichnet,**
**dass** das Stellglied (52, 53) des Leitorgans (48, 49) mit der Steuereinheit (45) verbunden ist und die Steuereinheit (45) in Abhängigkeit von dem von dem Wegesensor (42) generierten Positionssignal (PS) ein Stellsignal (S2, S3) generiert und mit dem generierten Stellsignal (S2, S3) die Position des Stellgliedes (52, 53) des Leitorgans (48, 49) regelt.

11. Mähdrescher nach wenigstens einem der vorhergehenden Ansprüchen,
**dadurch gekennzeichnet,**
**dass** die Leitorgane (48, 49) des Verteilorgans (29) das aus der Trenneinrichtung (13, 14) austretende Erntegut (20) proportional zur Lage der Verteilbreite (37) zur Längsachse (36) des Mähdreschers (1) dem Strohhäcksler (21) zuführen.

12. Mähdrescher nach wenigstens einem der vorhergehenden Ansprüchen,
**dadurch gekennzeichnet,**
**dass** die Abgabe der Erntegutmenge (26) im Austrittsbereich des Strohhäckslers (21) und im Austrittsbereich der Verteileinrichtung (27) der Zuführung des Erntegutes (20) im Eintrittsbereich des Strohhäckslers (21) entspricht.

## Claims

1. A method of operating a combine harvester having a crop material reducing and distributing apparatus, wherein the crop material reducing and distributing apparatus has a straw chopper (21) connected downstream of at least one separating device (13, 14) for reducing the size of crop material (20), and at least one distributing device (27) arranged downstream of the straw chopper (21) for distributing an amount of crop material (26) and the distributing device (27) is adjustable for changing a distribution width (37), with which the amount of crop material (26) is distributed on the field (28), and wherein a distributing member (29) is disposed between the separating device (13, 14) and the straw chopper (21),
**characterised in that**
the distributing member (29) regulates the feed of crop material (20) to the straw chopper (21) in dependence on the position of the distribution width (37).

2. A method according to claim 1 **characterised in that** the feed of the crop material (20) to the straw chopper (21) is determined by the deflection of the crop material (20) by the distributing member (29).

3. A method according to at least one of the preceding claims **characterised in that** the distributing member (29) deflects the crop material (20) in dependence on the position of the distribution width (37).

4. A combine harvester having a crop material reducing and distributing apparatus, wherein the crop material reducing and distributing apparatus has a straw chopper (21) connected downstream of at least one separating device (13, 14) for reducing the size of crop material (20), and at least one distributing device (27) arranged downstream of the straw chopper (21) for distributing an amount of crop material (26) and the distributing device (27) is adjustable for changing a distribution width (37), with which the amount of crop material (26) is distributed on the field (28), and wherein a distributing member (29) is disposed between the separating device (13, 14) and the straw chopper (21),
**characterised in that**
the distributing member (29) is connected to a control unit (45) in such a way that the distributing member (29) regulates the feed of crop material (20) to the straw chopper (21) in dependence on the position of the distribution width (37).

5. A combine harvester according to claim 4 **characterised in that** the distribution width (37) extends transversely relative to the longitudinal axis (36) of the combine harvester (1) and the distribution width (37) is displaceable by adjustment of the distributing device (27) transversely relative to the longitudinal axis (36) of the combine harvester (1).

6. A combine harvester according to at least one of the preceding claims **characterised in that** displacement of the distributing device (27) is effected by a control member (41).

7. A combine harvester according to at least one of the preceding claims **characterised in that** the position of the distribution width (37) is ascertained with a sensor (42), the sensor (42) being connected to the control unit (45).

8. A combine harvester according to at least one of the preceding claims **characterised in that** the sensor (42) is a travel sensor with which the displacement of the control member (41) is detected, wherein the travel sensor (42) produces a position signal (PS) proportionally in dependence on the position of the distribution width (37) relative to the longitudinal axis (36) of the combine harvester.

9. A combine harvester according to at least one of the preceding claims **characterised in that** the distributing member (29) has at least one pivotable guide member (48, 49), the guide member (48, 49) being displaceable by way of at least one control member (52, 53).

10. A combine harvester according to at least one of the preceding claims **characterised in that** the control member (52, 53) of the guide member (48, 49) is connected to the control unit (45) and the control unit (45) generates a control signal (S2, S3) in dependence on the position signal (PS) generated by the travel sensor (42) and with the generated control signal (S2, S3) regulates the position of the control member (52, 53) of the guide member (48, 49).

11. A combine harvester according to at least one of the preceding claims **characterised in that** the guide members (48, 49) of the distributing member (29) feed the crop material issuing from the separating device (13, 14) to the straw chopper (21) proportionally to the position of the distribution width (37) relative to the longitudinal axis (36) of the combine harvester (1).

12. A combine harvester according to at least one of the preceding claims **characterised in that** the discharge of the amount of crop material (26) in the outlet region of the straw chopper (21) and in the outlet region of the distributing device (27) corresponds to the feed of the crop material (20) in the intake region of the straw chopper(21).

## Revendications

1. Procédé pour faire fonctionner une moissonneuse-batteuse dotée d'un dispositif de hachage et de répartition de produits récoltés, le dispositif de hachage et de répartition de produits récoltés comprenant un hache-paille (21), qui est placé à la suite d'au moins un dispositif de séparation (13, 14) et est destiné à hacher les produits récoltés (20), et au moins un dispositif de répartition (27), qui est placé à la suite du hache-paille (21) et est destiné à répartir une quantité de produits récoltés (26), et le dispositif de répartition (27) pouvant être réglé pour modifier une largeur de répartition (37) sur laquelle la quantité de produits récoltés (26) est répartie sur le champ (28), et un organe de répartition (29) étant intercalé entre le dispositif de séparation (13, 14) et le hache-paille (21), **caractérisé par le fait que** l'organe de répartition (29) régule l'amenée de produits récoltés (20) au hache-paille (21), en fonction de la position de la largeur de répartition (37).

2. Procédé selon la revendication 1, **caractérisé par le fait que** l'amenée de produits récoltés (20) au hache-paille (21) est déterminée par la déviation des produits récoltés (20) par l'organe de répartition (29).

3. Procédé selon au moins une des revendications précédentes, **caractérisé par le fait que** l'organe de répartition (29) dévie les produits récoltés (20) en fonction de la position de la largeur de répartition (37).

4. Moissonneuse-batteuse dotée d'un dispositif de hachage et de répartition de produits récoltés, le dispositif de hachage et de répartition de produits récoltés comprenant un hache-paille (21), qui est placé à la suite d'au moins un dispositif de séparation (13, 14) et est destiné à hacher les produits récoltés (20), et au moins un dispositif de répartition (27), qui est placé à la suite du hache-paille (21) et est destiné à répartir une quantité de produits récoltés (26), et le dispositif de répartition (27) pouvant être réglé pour modifier une largeur de répartition (37) sur laquelle la quantité de produits récoltés (26) est répartie sur le champ (28), et un organe de répartition (29) étant intercalé entre le dispositif de séparation (13, 14) et le hache-paille (21), **caractérisée par le fait que** l'organe de répartition (29) est relié à une unité de commande (45) de manière telle que l'organe de répartition (29) régule l'amenée des produits récoltés au hache-paille (21) en fonction de la position de la largeur de répartition (37).

5. Moissonneuse selon la revendication 4, **caractérisée par le fait que** la largeur de répartition (37) s'étend perpendiculairement à l'axe longitudinal (36) de la moissonneuse (1) et la largeur de répartition (37) peut être décalée par réglage du dispositif de répartition (27), perpendiculairement à l'axe longitudinal (36) de la moissonneuse (1).

6. Moissonneuse selon au moins une des revendications précédentes, **caractérisée par le fait que** le déplacement du dispositif de répartition (27) est effectué par l'intermédiaire d'un organe d'actionnement (41).

7. Moissonneuse selon au moins une des revendications précédentes, **caractérisée par le fait que** la position de la largeur de répartition (37) est déterminée à l'aide d'un capteur (42), ledit capteur (42) étant connecté à l'unité de commande (45).

8. Moissonneuse selon au moins une des revendications précédentes, **caractérisée par le fait que** le capteur (42) est un capteur de déplacement (42) qui détecte le déplacement de l'organe d'actionnement (41), le capteur de déplacement (42) générant un signal de position (PS) qui est proportionnel à la position de la largeur de répartition (37) par rapport à l'axe longitudinal (36) de la moissonneuse (1).

9. Moissonneuse selon au moins une des revendications précédentes, **caractérisée par le fait que** l'organe de répartition (29) comporte au moins un organe de guidage (48, 49) pivotant, ledit organe de guidage (48, 49) pouvant être déplacé par l'intermédiaire d'au moins un organe d'actionnement (52, 53).

10. Moissonneuse selon au moins une des revendications précédentes, **caractérisée par le fait que** l'organe d'actionnement (52, 53) de l'organe de guidage (48, 49) est relié à l'unité de commande (45) et l'unité de commande (45) génère un signal d'actionnement (S2, S3), en fonction du signal de position (PS) généré par le capteur de déplacement (42), et règle la position de l'organe d'actionnement (52, 53) de l'organe de guidage (48, 49), à l'aide du signal d'actionnement (S2, S3) produit.

11. Moissonneuse selon au moins une des revendications précédentes, **caractérisée par le fait que** les organes de guidage (48, 49) de l'organe de répartition (29) dirigent les produits récoltés (20), sortant du dispositif de séparation (13, 14), vers le hache-paille (21), proportionnellement à la position de la largeur de répartition (37) par rapport à l'axe longitudinal (36) de la moissonneuse (1).

12. Moissonneuse selon au moins une des revendications précédentes, **caractérisée par le fait que** l'évacuation de la quantité de produits récoltés (26) dans la zone de sortie du hache-paille (21) et dans la zone de sortie du dispositif de répartition (27) correspond à l'amenée de produits récoltés (20) dans la zone d'entrée du hache-paille (21).
